# EUROPÄISCHE PATENTSCHRIFT

(11) **EP 4 201 662 B1**
(45) Veröffentlichungstag und Bekanntmachung des Hinweises auf die Patenterteilung: **23.10.2024**
(21) Anmeldenummer: 22214417.2
(22) Anmeldetag: 19.12.2022
(51) Int. Cl.: B30B 11/08, B30B 11/10, B30B 15/30, B65G 65/44, B65G 65/48

(54) **PULVERZUFÜHRUNG FÜR EINE TABLETTENPRESSE**
POWDER FEED FOR A TABLET PRESS
ALIMENTATION EN POUDRE POUR UNE PRESSE À COMPRIMÉS

(30) Priorität: 22.12.2021 DE 102021134197
(43) Veröffentlichungstag der Anmeldung: 28.06.2023
(73) Patentinhaber: Zerhoch, Horst, 76547 Sinzheim (DE)
(72) Erfinder: Zerhoch, Horst, 76547 Sinzheim (DE)
(74) Vertreter: Grünecker Patent- und Rechtsanwälte PartG mbB

(56) Entgegenhaltungen:
- CN-A- 111 452 421
- CN-A- 112 440 501
- DE-A1- 2 357 809
- DE-A1- 3 527 186
- JP-U- S6 117 299
- US-A1- 2009 142 437
- US-A1- 2017 355 162

## Beschreibung

Die vorliegende Erfindung betrifft eine Pulverzuführeinrichtung gemäß dem unabhängigen Vorrichtungsanspruch sowie eine zugehörige Tablettenpresse und ein Verfahren zum Betreiben einer Pulverzuführeinrichtung gemäß dem unabhängigen Verfahrensanspruch.

Bei bekannten Pulverzuführeinrichtungen für Tablettenpressen haben sich in der Praxis Schwächen oder Verbesserungspotenziale bei der Zuverlässigkeit der Zufuhr von Pulver aus dem Pulvervorratsbehälter in die Matrizendreheinheit gezeigt, insbesondere bei der Verarbeitung von vergleichsweise klebrigen Pulvern. Hierbei kam es teils zu unerwünschter Pulverbrückenbildung und Pulververklumpungen und folglich zu teils unterschiedlichen Pulvermengen in den Matrizenformen, was wiederum zu unerwünschten Gewichtsschwankungen bei der Tablettenproduktion führte. Zudem war der Grad an Pulververschleiß, also der Menge an Pulver, welche nicht zu Tabletten verpresst werden konnte, sondern ungenutzt dem Prozess verloren ging, teils verbesserungsbedürftig.

Stand der Technik findet sich beispielsweise in den Druckschriften AT234911 und EP2823958 A2.

Weiterer Stand der Technik zu Pulverzuführungen findet sich in den Druckschriften US 2017/355162 A1, DE 35 27 186 A1, JP S61 17299 U und DE23 57 809 A1. DE 35 27 186 A1 = offenbart eine Pulverzuführeinrichtung gemäss dem Oberbegriff des Anspruchs 1.

Der vorliegenden Erfindung liegt die Aufgabe zugrunde eine räumlich kompakte Pulverzuführeinrichtung bereitzustellen, welche bei einer breiten Bandbreite von Pulvern mit unterschiedlichen Fließeigenschaften, insbesondere bei relativ klebrigem, beispielsweise harzigem Pulvermaterial, eine stets zuverlässige, konstante und möglichst pulvermaterialschonende Zuführung einer gewünschten Pulvermenge in die jeweilige Tablettenmatrizenform sicherstellen kann.

Die vorliegende Erfindung löst die genannte Aufgabe mit den Merkmalen der unabhängigen Ansprüche 1 und 14.

Es hat sich überraschend gezeigt, dass bereits eine zumindest teilweise im Füllkanal angeordnete Füllkanalbewegungseinheit, welche dazu eingerichtet ist, Pulver im Füllkanal zu bewegen, die Zuverlässigkeit eines schwerkraftgetriebenen Fließens von Pulver vom Pulvervorratsbehälter durch den Füllkanal hin zu einer Matrizendreheinheit über eine große Bandbreite von verschiedenartigen Pulvern fördert, sprich begünstigt, insbesondere bei zum Verkleben neigenden Pulverarten oder Pulvermixturen. Durch ein zumindest teilweises Anordnen der Füllkanalbewegungseinheit im Füllkanal lässt sich die gewünschte Kompaktheit der Pulverzuführeinrichtung mit der gewünschten Zuverlässigkeit der Pulverzuführung auch bei zum Verkleben neigenden Pulvermaterialien in vorteilhafterweise verbinden.

Durch das verbesserte und zuverlässigere schwerkraftsgetriebene Fließen von Pulver durch den Füllkanal hin zu einer Matrizendreheinheit können Förderdruckkräfte auf das Pulver durch andere Fördermittel reduziert oder vermieden werden, wodurch unerwünschter Pulververschleiß gerade an Übergangsstellen mit Bewegungsspalten, wie insbesondere an der Anschlussstelle hin zu einer Matrizendreheinheit, reduziert werden kann.

Weiterhin ist die Füllkanalbewegungseinheit dazu eingerichtet, Pulver durch fortlaufende Start-Stopp-Bewegungen zu bewegen.

Es hat sich gezeigt, dass fortlaufende Start-Stopp-Bewegungen, also die Abfolge von Bewegung, Stillstand, Bewegung, Stillstand, usw. einen überraschend positiven Einfluss auf das gewünschte Mobilisieren von Pulver und somit auf das schwerkraftsgetriebene Fließen von Pulver durch den Füllkanal hin zur Matrizendreheinheit hat, insbesondere bei zum Verkleben neigenden Pulverstoffen. Im Vergleich hierzu wurden bei permanenten Bewegungen eine größere Tendenz zu Verklumpungen im Pulver festgestellt, was die Zuverlässigkeit des Pulvertransports hin zur Matrizendreheinheit beeinträchtigt hat.

All das zuvor Genannte gilt im gesteigerten Maße für ein optionales Anordnen der gesamten Füllkanalbewegungseinheit im Füllkanal.

In einer weiteren möglichen Ausführungsform weist die Pulverbewegungseinrichtung weiterhin eine drehende Pulverbewegungseinheit auf, welche oberhalb des Füllkanals angeordnet und dazu eingerichtet ist, Pulver durch Drehbewegung, insbesondere durch fortlaufende Start-Stopp-Drehbewegungen, hin zum Füllkanal zu bewegen.

Durch eine solche Anordnung einer drehenden Pulverbewegungseinheit oberhalb des Füllkanals kann die Zuverlässigkeit der Pulverzuführung hin zur Matrizendreheinheit weiter verbessert werden und gleichzeitig ein größerer Bereich bzw. eine größere Menge an Pulvervorrat zum fließenden Transport durch den Füllkanal mobilisiert werden.

In einer weiteren optionalen Ausführungsform kann die drehende Pulverbewegungseinheit am Boden des Pulvervorratsbehälters angeordnet sein. Dies steigert die Zuverlässigkeit der Zuführung und Mobilisierung von zur Verklebung neigendem Pulver im kritischen Bodenbereich, wo die größte Gewichtskraft der Pulverschüttung herrscht, wobei die drehende Pulverbewegungseinheit Pulver lediglich in der Bodenregion des Pulvervorratsbehälters mobilisiert, in der Bewegung zum gewünschten Fließen notwendig ist, und somit das Bildungsrisiko von unerwünschten Verklumpungen in oberen Bereichen des Pulvervorratsbehälters reduziert wird. Gleichzeitig wird das Pulver am Boden durchmischt.

In einer alternativen oder in einer mit dem zuvor Genannten kombinierten Ausführungsform kann der Antrieb der drehenden Pulverbewegungseinheit bodenseitig außerhalb des Pulvervorratsbehälters angeordnet sein.

Dies erlaubt Ausführungen, bei denen nur die nötigsten Teile der drehenden Pulverbewegungseinheit in den Pulvervorratsbehälter hineinragen, was unerwünschte Verklebungen bzw. Verklumpungsbildung mit nicht zwingend im Pulverraum notwendigen Teilen reduziert, eine kompaktere Bauform der Pulverzuführung ermöglicht und gleichzeitig das Pulverspeichervolumen im Pulvervorratsbehälter vergrößert und den Innenraum des Pulvervorratsbehälters leichter zugänglich macht.

In einer weiteren optionalen Ausführungsform weist die drehende Pulverbewegungseinheit ein mehrflügeliges Flügelrad auf, wobei die Flügel bei einer Drehbewegung zumindest über eine Teillänge, insbesondere über die vollständige Länge oder die nahezu vollständige Länge, des zum Pulvervorratsbehälters hin offenen Füllkanals streifen, und/oder der innere Außendurchmesser des Flügelrades bis an den Bereich des Füllkanals heranreicht.

Ein Streifen der Flügel über eine Teillänge des offenen Füllkanals erhöht die Zuverlässigkeit der Pulverzuführung, gerade bei zum Verkleben neigenden Pulvermaterialien. Dies gilt im besonderen Maße für ein optionales Streifen der Flügel über die vollständige Länge des offenliegenden Füllkanals. Hierdurch kann die gesamte Länge des Füllkanals zum Transport des Pulvers hin zur Füllkanalbewegungseinheit und der darunterliegenden Matrizendreheinheit genutzt werden, wodurch sich eine unerwünschte Pulver-Brückenbildung im Bereich des Füllkanals oder in Teilabschnitten des Füllkanals weniger nachteilig auswirkt.

Eine optionale Ausführung des inneren Außendurchmessers des Flügelrads bis an den Bereich des Füllkanals erhöht weiterhin die Zuverlässigkeit der Pulverzuführung auch bei klebrigen Pulvermischungen, da von oben nachfließendes Pulver hierdurch bereits in den zum Flügelrad radial äußeren Bereich des Füllkanals gelenkt werden kann.

In einer weiterführenden, optionalen Ausführungsform kann eine Pulverruhezone im Pulvervorratsbehälter radial außerhalb des Bewegungsbereichs der drehenden Pulverbewegungseinheit vorgesehen sein.

Durch eine solche Pulverruhezone wird dem Pulver bewusst ein Bereich zu Verfügung gestellt, in welchen der Bewegungsbereich der drehenden Pulverbewegungseinheit nicht hineinreicht. Es hat sich überraschend gezeigt, dass die Bereitstellung einer solchen Pulverruhezone es erlaubt, das Bilden von Verklumpungen im Pulver sowie unerwünschter Wärmeentwicklung im Pulver zu reduzieren, da das Pulver bei erhöhtem Druck in diese Zone hin ausweichen kann.

In einer weiteren möglichen Ausführungsform bedeckt eine vertikale Pulversäule bei befülltem Pulvervorratsbehälter mehr als 1/2, insbesondere mehr als 2/3, besonders mehr als 3/4, des von der drehenden Pulverbewegungseinheit eingenommenen Bewegungsfeldes, und/oder bedeckt eine vertikale Pulversäule bei befülltem Pulvervorratsbehälter mehr als 1/2, insbesondere mehr als 2/3, besonders mehr als 3/4 der zum Pulvervorratsbehälter hin offenen Füllkanallänge.

Derart hohe Bedeckungsgrade der drehenden Pulverbewegungseinheit und/oder der offenliegenden Länge des Füllkanals durch die vertikale Pulversäule im Pulvervorratsbehälter steigern die Zuverlässigkeit der Pulverzuführung hin zur Matrizendreheinheit und vermeiden gleichzeitig die Notwendigkeit von zusätzlichen Fördereinrichtungen auf dem Weg vom Pulvervorratsbehälter hin zur Matrizendreheinheit, was einer kompakten Bauart zugutekommt. Mit den optional oben genannten zunehmenden Bedeckungsgraden nimmt dieser positive Effekt weiter zu. Optionale Kombinationen von zuvor genannten hohen Pulversäulenbedeckungsgraden der drehenden Pulverbewegungseinheit und von zuvor genannten Pulversäulenbedeckungsgraden der Länge des Füllkanals steigern die Zuverlässigkeit der Pulverzuführung hin zur Matrizendreheinheit bei gleichzeitiger Vermeidung der Notwendigkeit von zusätzlichen Fördereinrichtungen im besonderen Maße.

In einer optionalen, vorteilhaften Ausführungsform ist die Füllkanalbewegungseinheit dazu eingerichtet, sich entlang eines Bewegungspfades im Füllkanal hin und her zu bewegen, insbesondere die Füllkanalbewegungseinheit auf ihrer dem Pulvervorratsbehälter zugewandten Seite Pulverbewegungsverstärker, insbesondere Hervorstehungen, aufweist.

Es hat sich überraschend gezeigt, dass eine Hin- und Herbewegung von zumindest Teilen einer Füllkanalbewegungseinheit entlang eines Bewegungspfades im Füllkanal zuverlässig unerwünschte Brückenbildung von Pulver vermeiden kann und somit die Zuverlässigkeit der Pulverzufuhreinrichtung erhöht, insbesondere beim zum Verkleben bzw. Verklumpen neigenden Pulvern. Sie gilt im besonderen Maße bei einer optional vollständigen Anordnung der Füllkanalbewegungseinheit im Füllkanal. Weiterhin gilt dies besonders, wenn die Füllkanalbewegungseinheit besagte optionale Pulverbewegungsverstärker, wie beispielsweise Hervorstehungen, beispielsweise Finnen, aufweist.

In einer weiteren, optionalen Ausführung folgt die Füllkanalbewegungseinheit mit ihrer Haupterstreckungsachse und/oder ihrem Bewegungspfad der länglichen Erstreckung des Füllkanals, und/oder der Füllkanal ist kreisbogenförmig ausgebildet.

Durch eine Ausbildung der Haupterstreckungsachse der Füllkanalbewegungseinheit folgend der länglichen Erstreckung des Füllkanals ist es möglich, in einfacher Weise eine relativ gleichmäßige und gleichzeitige Bewegung von Pulver über eine Länge des Füllkanals zu realisieren, was die Fließwilligkeit und Mobilisierung des Pulvers positiv beeinflusst und gleichzeitig Klumpenbildung vermeidet.

Ein ebenso optionales Folgen des Bewegungspfades der Erstreckung des Füllkanals hilft ebenfalls das Pulver über eine definierte Länge des Füllkanals in Bewegung zu halten.

Eine optionale kreisbogenförmige Ausbildung des Füllkanals erlaubt es eine längere Strecke des Füllkanals in einem Sektor des Pulverbehälterbodens unterzubringen und somit die Bewegung bzw. Mobilisierung des Pulvers auf einen kleineren Bereich zu konzentrieren. Gleichzeitig erlaubt eine kreisbogenförmige Ausbildung, dass eine Matrizendreheinheit in einfacher Weise mit ihren zum Füllkanal hin entsprechend offenliegenden Matrizenformen über eine einfache Rotationsbewegung dem Füllkanal folgen kann.

Frei wählbare Kombinationen der zuvor genannten optionalen Ausgestaltungen verstärken die zuvor genannten Effekte.

In einer möglichen, optionalen Weiterbildung ist ein Endabschnitt des Füllkanals in einem vertikal zum Pulvervorratsbehälter abgeschirmten Bereich angeordnet.

Hierdurch wird ein Befüllbereich geschaffen, welcher nicht unter dem Gewichtseinfluss der vertikal im Pulvervorratsbehälter stehenden Pulversäule steht. Somit ist es in diesem abgeschirmten Bereich beispielsweise möglich, Befüllungsverhältnisse am Endabschnitt des Füllkanals zu schaffen, welche unabhängig vom Befüllungsgrad des Pulvervorratsbehälters sind. Dies erhöht weiterhin die Zuverlässigkeit und Qualität der Pulverzuführung hin zu einer Matrizendreheinheit, insbesondere bei Pulvern, welche zum Verkleben und Brückenbildung neigen.

In einer optionalen, besonders vorteilhaften Weiterbildung der Erfindung ragen die drehende Pulverbewegungseinheit und/oder die Füllkanalbewegungseinheit mit ihren Bewegungsfeldern in den abgeschirmten Bereich hinein.

Ein Hineinragen der drehenden Pulverbewegungseinheit oder der Füllkanalbewegungseinheit in den abgeschirmten Bereich ermöglicht eine Bewegung von Pulver auch am abgeschirmten Endabschnitt des Füllkanals und begünstigt somit das schwerkraftsgetriebene Fließen von Pulver auch in diesem Bereich. Besonders vorteilhaft wird das Pulver in diesem Bereich bewegt, wenn optional beide Bewegungseinheiten in den abgeschirmten Bereich hineinragen.

In einer weiteren, optionalen Ausführungsform weist die Pulverbewegungseinrichtung eine abgeschirmte Bewegungseinheit auf, welche im abgeschirmten Bereich angeordnet ist und dazu eingerichtet ist, Pulver im abgeschirmten Bereich zu bewegen, insbesondere hin zum Füllkanalendabschnitt zu bewegen.

Eine derartige abgeschirmte Bewegungseinheit erlaubt ein speziell auf die Gegebenheiten im abgeschirmten Bereich angepasstes Bewegen von Pulver, um ein schwerkraftsgetriebenes Flie-ßen von Pulver durch den Endabschnitt des Füllkanals und somit eine definierte finale Befüllung einer darunterliegenden Matrizenform zu begünstigen. Gleichzeitig erfährt das Pulver hierbei keine oder nur geringe Druckkräfte von der abgeschirmten Bewegungseinheit, wodurch Pulververschleiß an der Anschlussstelle zur Matrizendreheinheit weiter reduziert werden kann.

In einer besonders vorteilhaften optionalen Ausführungsform ist die abgeschirmte Bewegungseinheit dazu eingerichtet, Pulver hin zum Füllkanalendabschnitt zu bewegen. Dies unterstützt im besonderen Maße das Fließen von Pulver hin zum Füllkanalendabschnitt.

Hierbei ist anzumerken, dass die abgeschirmte Bewegungseinheit Pulver lediglich bewegt bzw. mobilisiert, um ein schwerkraftsgetriebenes Fließen des Pulvers hin zu einer Matrizendreheinheit zu fördern.

Vorteilhafterweise ist die abgeschirmte Bewegungseinheit in einer optionalen Ausführungsform dazu eingerichtet, Pulver durch fortlaufende Start-Stopp-Bewegungen zu bewegen.

Wie bereits zuvor hier erwähnt, hat sich gezeigt, dass fortlaufende Start-Stopp-Bewegungen, also die Abfolge von Bewegung, Stillstand, Bewegung, Stillstand, usw. einen überraschend positiven Einfluss auf gewünschtes Mobilisieren von Pulver und somit auf das Fließen von Pulver durch den Füllkanalendabschnitt hin zu einer darunterliegenden Matrizendreheinheit hat.

In einer weiterführenden, optionalen Ausführungsform ist die abgeschirmte Bewegungseinheit dazu eingerichtet, sich entlang eines Bewegungspfades hin und her zu bewegen, insbesondere hierbei der Bewegungspfad von außen in den Füllkanal hineinragt.

Es hat sich gezeigt, dass eine gerichtete Hin- und Herbewegung das Pulver im abgeschirmten Bereich in vorteilhafter Weise mobilisiert und zuverlässig unerwünschte Brückenbildung von Pulver vermeiden kann. Bei einem optionalen Hineinragen des Bewegungspfades in den Füllkanal kann Pulver gezielt auch im Füllkanal mobilisiert werden und auch unerwünschte Brückenbildung im Füllkanalendabschnitt vermieden werden.

In weiteren optionalen Ausführungsformen ist der Bewegungspfad der abgeschirmten Bewegungseinheit senkrecht zum Bewegungspfad der Füllkanalbewegungseinheit angeordnet und/oder senkrecht zur Drehebene der drehenden Pulverbewegungseinheit angeordnet und/oder der Bewegungspfad der Füllkanalbewegungseinheit senkrecht zur Drehebene der drehenden Pulverbewegungseinheit angeordnet.

Durch derartige senkrechte Anordnungen zwischen Bewegungspfaden und/oder Drehebene der Bewegungseinheiten können die Bewegungseinheiten vorteilhaft den dreidimensionalen Raum im Bereich des Füllkanals ausnutzen und Pulver umfassend bewegen bzw. mobilisieren.

In weiteren optionalen Ausführungsformen ist die Pulverzuführeinrichtung eingerichtet, dass sich die Füllkanalbewegungseinheit und/oder die abgeschirmte Bewegungseinheit bewegen, wenn die drehende Pulverbewegungseinheit stillsteht, und/oder ist die Pulverzuführeinrichtung eingerichtet, dass sich die abgeschirmte Bewegungseinheit auf den Füllkanalendabschnitt zubewegt während sich die Füllkanalbewegungseinheit vom Füllkanalendabschnitt wegbewegt.

Derartige Kombinationen von gesteuerten Bewegungsabläufen ermöglichen dem Pulver in Teilbereichen der Pulverzuführeinrichtung kurze Ruhephasen, was das Verklumpungsrisiko reduziert. Zudem vermeiden derartige Kombinationen von gesteuerten Bewegungsabläufen, dass Pulver zwischen Bewegungseinheiten ungewollt komprimiert wird, was das Verklumpungsrisiko gerade bei zum Verkleben neigenden Pulvern reduziert.

Die vorliegende Erfindung betrifft weiterhin eine Tablettenpresse aufweisend eine Pulverzuführeinrichtung gemäß einer oder mehrerer der hier zuvor genannten Ausführungsformen.

Eine besonders vorteilhafte Ausführungsform betrifft eine stationsweise rotierende Tablettenpresse, aufweisend eine Pulverzuführeinrichtung gemäß einer oder mehrerer der hier zuvor genannten Ausführungsformen.

Idealerweise weist in einer möglichen Ausführungsform eine Tablettenpresse eine stationsweise getaktet rotierende Matrizendreheinheit auf, wobei die Tablettenpresse dazu eingerichtet ist, die Pulverbewegungseinrichtung in einem Takt abgestimmt zum Takt der Matrizendreheinheit zu bewegen.

Ein Bewegen der Pulverbewegungseinrichtung und somit ein Bewegen der besagten Bewegungseinheiten der Pulverbewegungseinrichtung in einem Takt abgestimmt zum Takt der Matrizendreheinheit erlaubt ein aufeinander abgestimmtes schwerkraftsgetriebenes Fördern von Pulver aus dem Pulvervorratsbehälter in die Matrizendreheinheit, ohne dass sich hierbei auf dem Förderweg Pulver in unerwünschter Weise aufstaut und verklumpt. Dies trägt weiterhin dazu bei, den Pulververschleiß an der Anschlussstelle zur Matrizendreheinheit zu reduzieren.

Die anfangs genannte Aufgabe wird weiterhin durch ein Verfahren gemäß dem unabhängigen Verfahrensanspruch gelöst.

Hierbei wird ein Verfahren zum Betreiben einer Pulverzuführeinrichtung für eine Tablettenpresse vorgeschlagen, wobei Pulver im Füllkanal eines Pulvervorratsbehälterbodens mittels einer zumindest teilweise im Füllkanal angeordneten Füllkanalbewegungseinheit durch eine fortlaufende Start-Stopp-Bewegungsabfolge bewegt wird.

Wie hierzu Beginn bereits erwähnt, hat sich überraschend gezeigt, dass ein derartiges Bewegen von Pulver im Füllkanal die Zuverlässigkeit eines schwerkraftgetriebenen Fließens von Pulver durch den Füllkanal hin zu einer Matrizendreheinheit über eine große Bandbreite von verschiedenartigen Pulvern verbessert, insbesondere bei Pulverarten mit zum Verkleben neigenden Naturstoffen. Da hierbei die Füllkanalbewegungseinheit zumindest teilweise im Füllkanal angeordnet ist, lässt sich das Verfahren weiterhin mit einer kompakten Pulverzuführeinrichtung realisieren.

Durch das verbesserte und zuverlässigere schwerkraftsgetriebene Fließen von Pulver durch den Füllkanal hin zu einer Matrizendreheinheit können Förderdruckkräfte auf das Pulver durch andere Fördermittel reduziert oder vermieden werden, wodurch unerwünschter Pulververschleiß gerade an Übergangsstellen mit Bewegungsspalten, wie insbesondere an der Anschlussstelle hin zu einer Matrizendreheinheit, reduziert werden kann.

All das zuvor Genannte gilt im besonderen Maße bei einem optionalen Bewegen von Pulver durch eine vollständig im Füllkanal angeordnete Füllkanalbewegungseinheit.

Die anfangs genannte Aufgabe wird weiterhin gelöst durch ein erfindungsgemäßes Betreiben einer Pulverzuführeinrichtung oder einer Tablettenpresse gemäß einer oder mehrerer der hier zuvor beschriebenen Ausführungsformen.

In weiteren optionalen Ausführungen der hier zuvor genannten Ausführungen der Pulverzuführeinrichtung und der Tablettenpresse sowie des zugehörigen Verfahrens liegt eine Matrizendreheinheit direkt unter dem Füllkanal, optional streift diese während ihrer drehenden Bewegungen, insbesondere während ihrer stationsweisen Drehbewegung, an der Füllkanalunterseite vorbei, damit Pulver bei möglichst geringem Pulververlust in entsprechend freilegende Matrizenformen fließen kann.

Nachfolgend wird eine mögliche Ausführungsform einer erfindungsgemäßen Pulverzuführeinrichtung, welche in vorteilhafter Weise hier zuvor erläuterte mögliche Ausführungsformen kombiniert, anhand der Figuren näher erläutert.

### Hierbei zeigen

Fig. 1 eine perspektivische Ansicht von oben auf eine erfindungsgemäße Pulverzuführeinrichtung mit einer Seitenwandung des Pulvervorratsbehälters der besseren Anschaulichkeit halber transparent gehalten,
Fig. 2 eine perspektivische Ansicht von unten auf die Pulverzuführeinrichtung aus Fig. 1,
Fig. 3 eine vergrößerte Teilansicht einer Perspektive von unten auf einen Füllkanalendabschnitt der Fig. 2, mit Teilen der Pulverzuführeinrichtung zur besseren Veranschaulichung transparent gehalten,
Fig. 4 eine Ansicht von oben auf die Pulverzuführeinrichtung aus den vorherigen Figuren mit der Seitenwandung und dem Deckel der besseren Anschaulichkeit halber nicht dargestellt,
Fig. 5 eine Perspektive von oben auf die Abbildung aus Fig. 4,
Fig. 6 eine Perspektive ähnlich der Fig. 5 mit Teilen der Bodenkonstruktion des Pulvervorratsbehälters transparent dargestellt und Teilen des Antriebs einer abgeschirmten Bewegungseinheit ausgeblendet,
Fig. 7 eine Teilansicht einer Perspektive ähnlich wie in Fig. 5, mit dargestelltem Antrieb der abgeschirmten Bewegungseinheit,
Fig. 8 eine erfindungsgemäße Tablettenpresse aufweisend die Pulverzuführeinrichtung aus den vorherigen Figuren, wobei zum leichteren Verständnis die Pulverzuführeinrichtung separiert von der restlichen Tablettenpresse dargestellt ist.

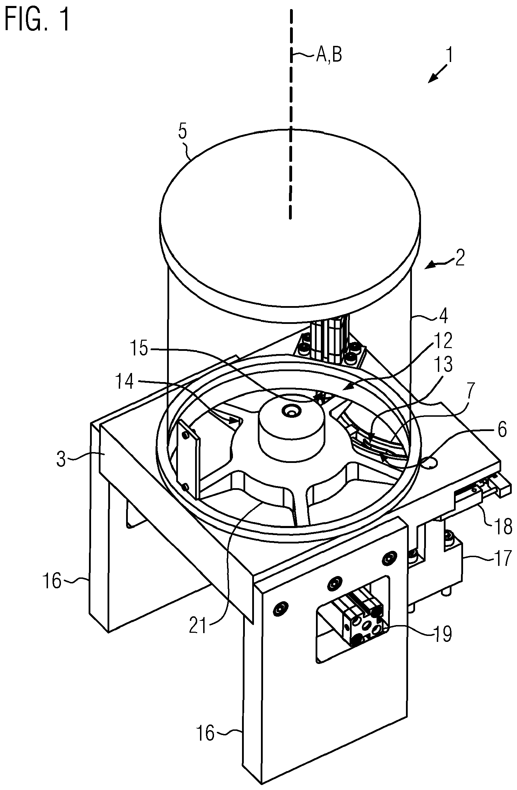

Fig. 1 zeigt eine Pulverzuführeinrichtung 1 gemäß einer Ausführungsform der vorliegenden Erfindung.

Die Pulverzuführeinrichtung 1 weist einen Pulvervorratsbehälter 2 auf, welcher Teile einer Bodenkonstruktion 3 sowie eine Seitenwandung 4, hier zylindrisch, und einen entsprechenden Deckel 5 umfasst. Die zylindrische Seitenwandung 4 ist hier der leichteren Übersicht halber transparent dargestellt.

Die hier plattenartig ausgeführte Bodenkonstruktion 3 ist in dieser Ausführungsform mehrteilig ausgeführt und weist einen nutartigen Füllkanal 6 auf, welcher sich als kreisbogenförmig ausgebildetes Durchgangslangloch konstanter Öffnungsweite in der Bodenkonstruktion 3 von einem Anfangsabschnitt 7 des Füllkanals 6 hin zu einem Endabschnitt 8 des Füllkanals 6 erstreckt.

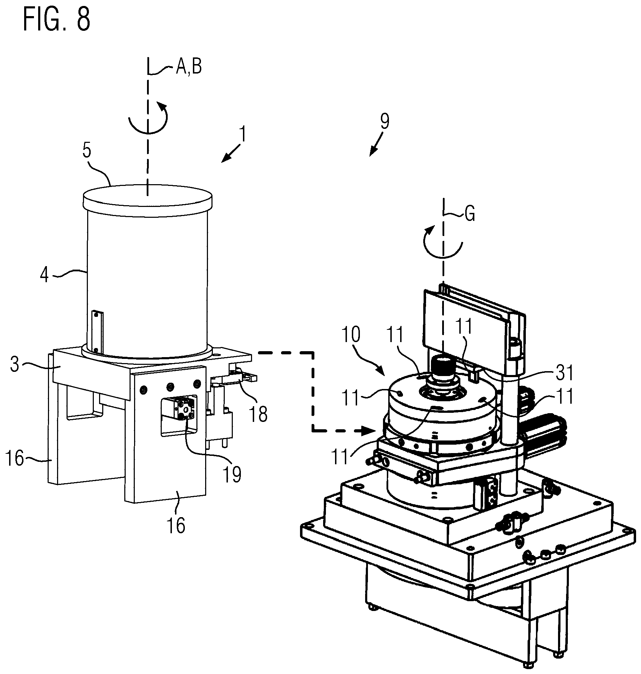

In dieser Ausführungsform ist die Pulverzuführeinrichtung 1 dazu eingerichtet, dass eine in einer Tablettenpresse 9 unterhalb des Füllkanals liegende Matrizendreheinheit 10 mit ihren offenliegenden Matrizenformen 11 durch den Füllkanal 6 befüllt werden kann, wobei sich im Betrieb der Tablettenpresse 9 eine Matrizenform 11 der rotierenden Matrizendreheinheit 10, siehe auch Fig. 8, zuerst unterhalb des Anfangsabschnitts 7 des Füllkanals 6 befindet und nachfolgend unterhalb des Endabschnitts 8 des Füllkanals 6 befindet.

Die Öffnungsweite des Füllkanals 6 ist auf die Öffnungsweite der Matrizenformen 11 abgestimmt und entspricht dieser.

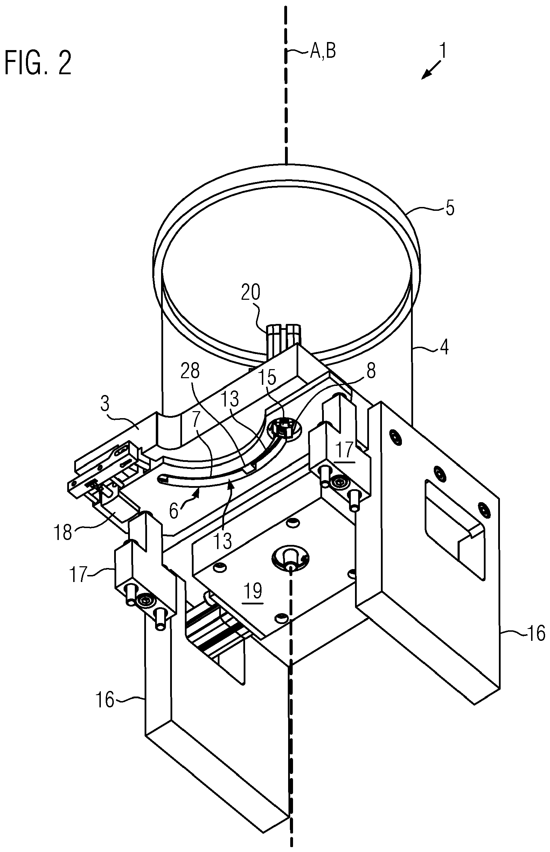

Wie einer Zusammenschau der Figuren 1 und 2 entnommen werden kann, ist der Füllkanal 6 auf seiner gesamten im Pulvervorratsbehälter 2 liegenden Erstreckungslänge zum Pulvervorratsbehälter 2 hin offen sowie nach unten zur Umgebung hin offen, sodass im Betrieb Pulver schwerkraftsgetrieben vom Pulvervorratsbehälter 2 durch den Füllkanal 6 hin zu einer unmittelbar darunterliegenden, in einer möglichen Ausführungsform unmittelbar an der Unterseite des Füllkanals 6 vorbeistreifenden, Matrizendreheinheit 10 (in Fig. 1 und 2 nicht dargestellt), fließen kann.

Die Pulverzuführeinrichtung 1 umfasst eine Pulverbewegungseinrichtung 12 zum Bewegen bzw. Mobilisieren von Pulver im Bereich des Füllkanals 6, um ein schwerkraftsgetriebenes Fließen von Pulver vom Pulvervorratsbehälter 2 durch den Füllkanal 6 in eine bei einer Tablettenpresse 9 darunterliegende Matrizendreheinheit 10 zu bewirken und zu unterstützen.

In der vorliegenden Ausführungsform weist die Pulverbewegungseinrichtung 12 neben einer Füllkanalbewegungseinheit 13 eine drehende Pulverbewegungseinheit 14 und eine abgeschirmte Bewegungseinheit 15 auf.

In einer weiteren, nicht dargestellten Ausführungsform weist die Pulverbewegungseinrichtung 12 lediglich die Füllkanalbewegungseinheit 13 auf.

In einer anderen, nicht dargestellten Ausführungsform umfasst die Pulverbewegungseinrichtung 12 lediglich die Füllkanalbewegungseinheit 13 und die drehende Pulverbewegungseinheit 14.

In einer weiteren, ebenfalls nicht dargestellten Ausführungsform umfasst die Pulverbewegungseinrichtung 12 lediglich die Füllkanalbewegungseinheit 13 und die abgeschirmte Bewegungseinheit 15.

Die plattenartige Bodenkonstruktion 3 in der in den Figuren gezeigten Ausführungsform erstreckt sich im installierten Zustand der Pulverzuführeinrichtung 1 vornehmlich entlang der Horizontalen und steht in der Horizontalen über die Seitenwandung 4 des Pulvervorratsbehälters 2 hinaus, und kann somit direkt als Befestigungspunkt von zwei sich an gegenüberliegenden Seiten der Bodenkonstruktion 3 gegenüberstehenden Montagepfeilern 16 genutzt werden, welche einen Großteil der Gewichtskraft der Pulverzufuhreinrichtung 1 aufnehmen und zusammen mit zwei weiteren bodenseitigen Montagefüßen 17 an einer Tablettenpresse 9 angebracht werden können, siehe hierzu auch beispielhaft Fig. 8.

Weiterhin dient die Bodenkonstruktion 3 durch ihr horizontales Überstehen auch als direkte Montage- oder Verbindungsstelle für andere Bauteilen der Pulverzuführeinrichtung 1, wie beispielsweise für die drehende Pulverbewegungseinheit 14, für die Füllkanalbewegungseinheit 13 und für die abgeschirmte Bewegungseinheit 15 sowie für deren Antriebe 18, 19, 20.

Die drehende Pulverbewegungseinheit 14 ist in dieser Ausführungsform durch ein Flügelrad 21 angeordnet am Boden 3 des Pulvervorratsbehälters verkörpert. Andere Ausführungen der Pulverbewegungseinheit 14, welche das Pulver durch eine Drehbewegung hin zum Füllkanal bewegen, sind ebenfalls denkbar.

Die Drehachse A der drehenden Pulverbewegungseinheit 14 ist in dieser Ausführungsform die Rotationsachse des Flügelrades 21, erstreckt sich parallel zur Hauptachse B des Pulvervorratsbehälters 2, und ist im installierten Zustand der Pulverzuführeinrichtung 1 parallel zur Vertikalen.

Das sich in dieser Ausführungsform zur Rotationsachse A hin nach oben abgestuft konisch verjüngende Flügelrad 21 hat weiterhin in dieser Ausführungsform fünf gleichmäßig über seinen Umfang verteilte, nach außen sich verjüngende Flügel 22. Die Flügel 22 streifen bei einer Drehbewegung mit minimalem Abstand über die bis auf den Füllkanal ansonsten geschlossene Oberfläche der Bodenkonstruktion 3 sowie über den Füllkanal 6.

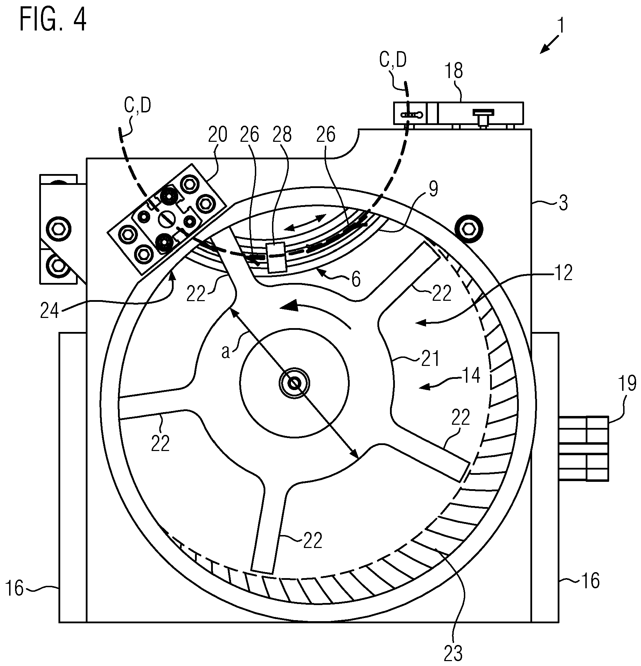

Wie Fig. 4 gut entnommen werden kann, ist in dieser Ausführungsform der innere Außendurchmesser a des Flügelrads 21 hier so gewählt, dass er bis an den Bereich des Füllkanals 6 heranreicht, von wo aus durch Bewegung mobilisiertes Pulver in und durch den Füllkanal 6 fließen kann.

Die Flügelanzahl ist bevorzugt derart auf den Kreissektor, welchen ein Flügel 22 pro Start-Stopp-Drehbewegung abfährt, abgestimmt, dass sich ein Flügel 22 über die gesamte oder die nahezu gesamte zum Pulvervorratsbehälter 2 hin offene Länge des Füllkanals 6 bewegen kann. Die winkelgradmäßige Drehbewegung des Flügelrads 21 ist im vorliegenden Fall abgestimmt auf die winkelgradmäßige Drehbewegung der Matrizendreheinheit 10. Eine Anzahl von fünf gleichmäßig an dem Flügelrad 21 verteilten Flügeln 22 hat sich in der Praxis besonders bewährt.

Wie der Figur 4 weiterhin entnommen werden kann, weist der Pulvervorratsbehälter 2 radial außerhalb des Bewegungsbereichs der sich drehenden Pulverbewegungseinheit 14, hier des Flügelrads 21, eine im Grundriss in dieser Ausführungsform mondsichelförmige Pulverruhezone 23 auf (schraffiert in Fig. 4), in die die drehenden Flügel 22 nicht hineinreichen. Dies wird in dieser Ausführungsform erreicht durch eine exzentrische Anordnung der Drehachse A der Pulverbewegungseinheit im Vergleich zur Haupterstreckungsachse B des Pulvervorratsbehälters 2. Gleichzeitig ragen so die Spitzen der Flügel 22 in einen nachfolgend näher erläuterten abgeschirmten Bereich 24.

Wie ebenfalls der Figur 4 gut entnehmbar, bedeckt in dieser Ausführungsform die vertikale Pulversäule, welche in dieser Ausführungsform durch die zylindrische Seitenwandung 4 umfriedet wird, bei befülltem Pulvervorratsbehälter 2 weit mehr als 3/4 des Bewegungsfeldes des Flügelrads 21 und mehr als 3/4 der zum Pulvervorratsbehälter hin offenen Füllkanallänge, sprich die gesamte zum Füllkanal 6 hin offenliegenden Füllkanallänge bis auf den Endabschnitt 8 im abgeschirmten Bereich 24.

Der zur drehenden Pulverbewegungseinheit 14 zugehörige Antrieb 19 ist in dieser Ausführungsform bodenseitig außerhalb des Pulvervorratsbehälters 2 angeordnet, wie Fig. 2 entnommen werden kann. Der Antrieb weist hierbei einen Linearaktuator, vorzugsweise pneumatisch, sowie ein Getriebe mit Freilauf auf. In der vorliegenden Ausführung bewegt das Flügelrad 21 mit fortlaufenden Start-Stopp-Drehbewegungen Pulver hin zum Füllkanal, also hier mittels einer intermittierenden Rotation. Gleichzeitig wird das Pulver durch die Bewegungen durchmischt und aufgelockert.

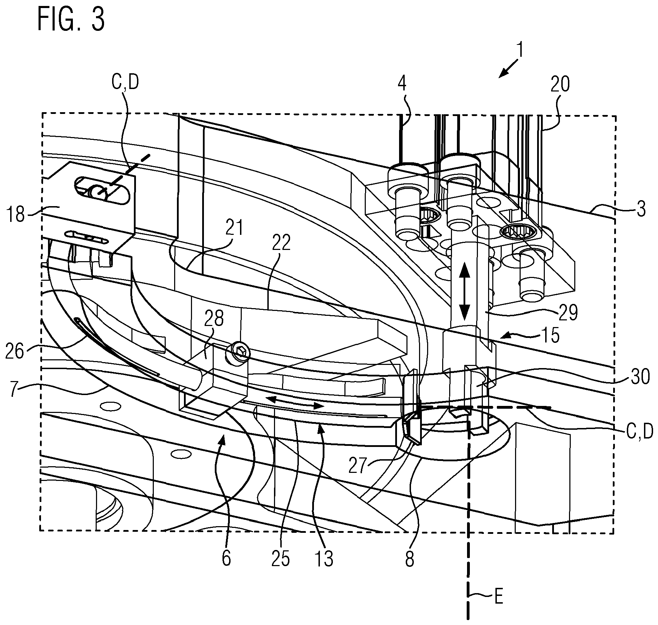

Wie am besten der vergrößerten Teilansicht von Fig. 3 entnommen werden kann, ist die Füllkanalbewegungseinheit 13 in dieser Ausführungsform vollständig im Füllkanal 6 angeordnet.

Die Füllkanalbewegungseinheit 13 erstreckt sich hierbei entlang einer kreisbogenförmigen Haupterstreckungsachse C, die der kreisbogenförmigen Längserstreckung des Füllkanals 6 folgt.

Die Füllkanalbewegungseinheit 13 ist hierbei als ein entlang eines Bewegungspfades D beweglicher Stab 25 ausgebildet, welcher auf seiner Oberseite, wie hier auch auf seiner Unterseite, Pulverbewegungsverstärkerstrukturen aufweist, hier in der Form von flossenartig S-förmigen Hervorstehungen 26 aufweist. Am offenen Ende des Stabes 25 im Bereich des Endabschnitts 8 ist ein gebogener Schiebeschild 27 angebracht.

Die Füllkanalbewegungseinheit 13 ist außerhalb des Füllkanals 6 und des Pulvervorratsbehälters 2 seitlich an der Bodenkonstruktion 3 mit einem Antrieb 18, hier einem Linearaktuator, vorzugsweise pneumatisch betrieben, gekoppelt. Der Antrieb 18 bewegt die Füllkanalbewegungseinheit 13 im Betrieb in fortlaufenden Start-Stopp-Bewegungen entlang des Bewegungspfades D im Füllkanal 6 hin und her. Ein stationäres Lager 28 etwa auf halber Wegstrecke des Füllkanals führt den Stab 25 hierbei.

Wie wohl am anschaulichsten den Figuren 4 bis 6 entnommen werden kann, weist die Pulverzuführeinrichtung 1 in dieser Ausführungsform weiterhin horizontal seitlich der Seitenwandung 4 den vertikal zum Pulvervorratsbehälter 2 abgeschirmten Bereich 24 auf, in welchem die abgeschirmte Bewegungseinheit 15 angeordnet ist. Der abgeschirmte Bereich 24 wird hierbei durch einen vom restlichen Pulvervorratsbehälter 2 in radialer Richtung zurückspringenden Hohlraum in der Bodenkonstruktion 3 gebildet. In diesem grottenartigen, vertikal zum restlichen Pulvervorratsbehälter 2 abgeschirmten Bereich ist die abgeschirmte Bewegungseinheit 15 angeordnet, die dazu eingerichtet ist, Pulver speziell im abgeschirmten Bereich 24 durch fortlaufende Start-Stopp-Bewegungen entlang eines hier vertikal verlaufenden Bewegungspfades E hin und her zu bewegen, und Pulver hierbei hin zum Endabschnitt 8 des Füllkanals 6 zu bewegen. Die abgeschirmte Bewegungseinheit 15 weist hierzu in dieser Ausführungsform eine Kolbenstange 29 auf, welche an ihrem freien Ende mit einer Struktur 30 versehen ist, welche Pulver im Bereich des Endabschnitts 8 bewegen und etwaig in diesem Bereich gebildete Pulverbrücken aufbrechen kann, ohne hierbei das Pulver in nennenswerter Weise zu pressen. In dieser Ausführung ist diese Struktur 30 stimmgabelförmig ausgeführt, alternativ wäre eine klingenartige Struktur denkbar.

Der Antrieb 20 der abgeschirmten Bewegungseinheit 15 ist außerhalb des Pulvervorratsbehälters 2 vertikal oberhalb der Bodenkonstruktion 3 angeordnet, und in dieser Ausführung als Linearaktuator, vorzugsweise pneumatisch betrieben, ausgeführt.

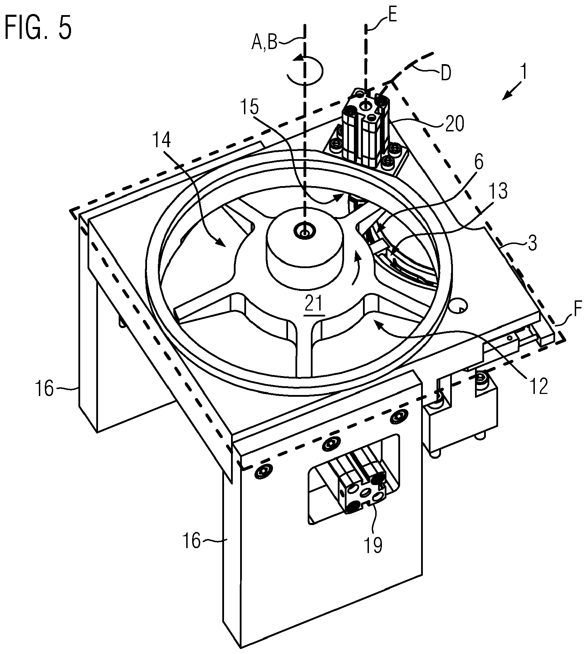

Wie wohl den Figuren 5 bis 7 am besten entnehmbar ist, sind in dieser Ausführungsform die Bewegungspfade D, E der Füllkanalbewegungseinheit 13 und der abgeschirmten Bewegungseinheit 15 senkrecht zueinander in der Vertikalen und der Horizontalen angeordnet. Der Bewegungspfad E der abgeschirmten Bewegungseinheit ist weiterhin senkrecht zur Drehebene F des Flügelrads 21 angeordnet und die horizontale Drehebene F des Flügelrads 21 liegt parallel zu und oberhalb vom Bewegungspfad D der Füllkanalbewegungseinheit 13.

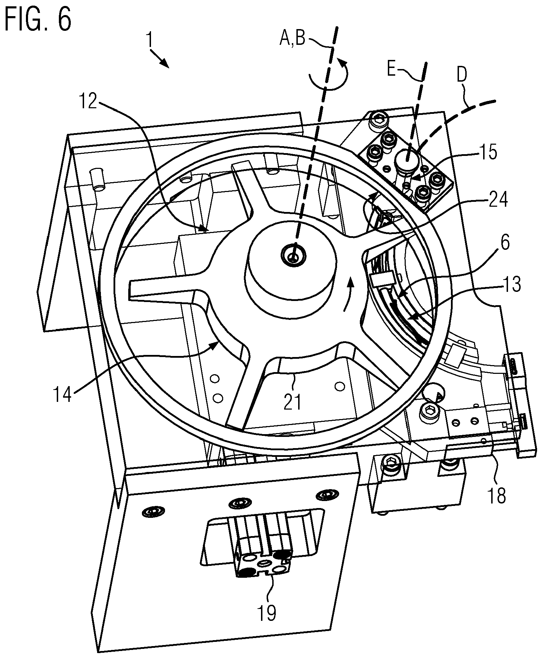

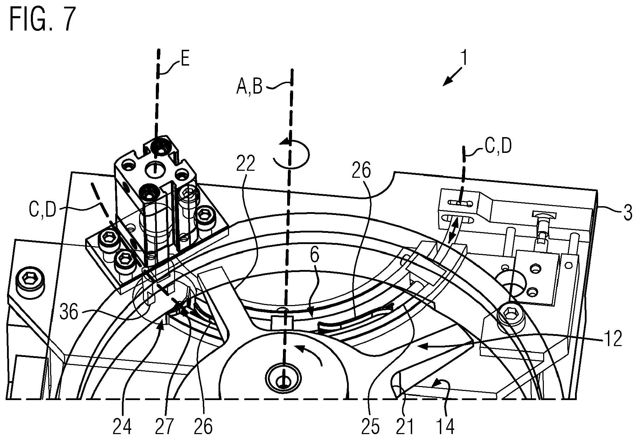

Wie weiterhin den Figuren 6 und 7 wohl am besten zu entnehmen ist, reicht der Bewegungspfad D der abgeschirmten Bewegungseinheit 15 hier mit der stimmgabelähnlichen Struktur 30 bis in den Füllkanal 6 hinein, wie auch die Bewegungsfelder der Füllkanalbewegungseinheit 13 und der drehenden Pulverbewegungseinheit 14, siehe die Position des Schilds 27 sowie der Spitze des Flügels 22 in den Figuren 4 und 7.

Fig. 8 zeigt eine beispielhafte Ausführung einer Tablettenpresse 9 gemäß der vorliegenden Erfindung. Die Pulverzuführeinrichtung 1 ist hier zum leichteren Verständnis von der restlichen Tablettenpresse 9 separiert dargestellt, wobei ein gestrichelter Pfeil die Zugehörigkeit zur restlichen Tablettenpresse illustriert.

In dieser Ausführungsform weist die Tablettenpresse 9 die Matrizendreheinheit 10 mit fünf nach oben offenen Matrizenformen 11 auf, wobei die mit Pulver vollständig gefüllten Matrizenformen in einer in Drehrichtung nachgelagerten Pressstation 31 zu Tabletten gepresst werden.

Die Matrizendreheinheit 10 rotiert im Betrieb der Presse intermittierend um ihre Rotationsachse G in eine vordefinierte Richtung, hier im Uhrzeigersinn. Im vollständig zusammengebauten Zustand ist die Pulverzuführeinrichtung 1 so an der restlichen Tablettenpresse angebracht, dass die rotierende Matrizendreheinheit 10 mit ihren rotierenden Kavitäten bzw. Matrizenformen 11 an der Unterseite des Füllkanals 6 intermittierend vorbeistreift. Der Füllkanal 6 und die Positionen der Matrizenformen 11 sind dabei so aufeinander abgestimmt, dass in einer Stopp-Phase der Matrizendreheinheit 10 eine Matrizenform unterhalb des Anfangsabschnitts 7 und eine benachbarte Matrizenform 11 unterhalb des Endabschnitts 8 des Füllkanals 6 liegt.

Nachfolgend wir eine mögliche Ausführungsform eines erfindungsgemäßen Verfahrens zum Betreiben einer Pulverzuführeinrichtung 1 basierend auf den Figuren kurz beschrieben.

Der Pulvervorratsbehälter 2 wird mit Pulver befüllt bis zumindest das Flügelrad 21 und somit der Boden 3 des Pulvervorratsbehälters 2 mit Pulver bedeckt sind.

Die Pulverbewegungseinrichtung 12, also die Füllkanalbewegungseinheit 13, die drehende Pulverbewegungseinheit 14 und die abgeschirmte Bewegungseinheit 15, wird anschließend in einem zuvor definierten Takt betrieben. Dieser Takt ist bevorzugt abgestimmt auf den Drehtakt der Matrizendreheinheit 10 bzw. sind sämtliche Bewegungsabläufe der Tablettenpresse 9, einschließlich der Pulverzuführeinrichtung 1, aufeinander abgestimmt.

Die intermittierend rotierenden Flügel 22 des Flügelrads 21 drehen im selben Takt wie die Matrizendreheinheit 10, also hier synchron. Hierbei wird Pulver am Boden 3 des Pulvervorratsbehälters 2, einschließlich des Bereichs des Füllkanals 6, mobilisiert und aus entfernteren Abschnitten des Pulvervorratsbehälters 2 hin zum Füllkanal 6 gefördert. Durch die Stopp- bzw. Ruhephasen des Flügelrads 21 sowie durch die Ruhezone 23 wird ein Verklumpen des Pulvers sowie ein übermäßiges Erwärmen reduziert.

Während Flügelrad 21 und Matrizendreheinheit 10 gleichzeitig drehen, wird Pulver durch ein Streifen mindestens eines Flügels 22 über den Füllkanal 6 zu diesem hinbewegt und ein Fließen durch den Füllkanal 6 hin zu den sich unterhalb des Füllkanals in dieser Zeitspanne vorbeibewegenden Matrizenformen 11 durch ein Mobilisieren des Pulvers in diesem Bereich begünstigt. Sowohl das Flügelrad 21 wie auch die Matrizendreheinheit 10 drehen sich in Richtung des Endabschnitts 8 des Füllkanals 6.

In der Stopp-Phase des Flügelrads 21 und der Matrizendreheinheit 10 liegt eine neue, noch unbefüllte Matrizenform 11 unterhalb des Anfangsabschnitts 7 des Füllkanals sowie eine abhängig von den Fließeigenschaften des Pulvers zumindest teilweise gefüllte Matrizenform 11 unterhalb des Endabschnitts 8 des Füllkanals.

In dieser Stopp- bzw. Ruhephase von Flügelrad 21 und Matrizendreheinheit 10 bewegt sich die Füllkanalbewegungseinheit 13 im Füllkanal entlang ihres Bewegungspfades D hin und her, so dass ein schwerkraftsgetriebenes Fließen von Pulver in die unter dem Anfangsabschnitt 7 wartende Matrizenform sowie unter dem Endabschnitt 8 wartenden Matrizenform begünstigt wird. Die flossenartigen Hervorstehungen 26 der Füllkanalbewegungseinheit 13 verstärken die Mobilisierung und somit das Fließen des Pulvers durch den Füllkanal 6.

Der Schild 27 der Füllkanalbewegungseinheit 13 schiebt gleichzeitig Pulver in den Endabschnitt 8 des Füllkanals 6 nach, bei jeder Bewegung hin zum Endabschnitt 8.

Gleichzeitig bewegt sich die abgeschirmte Bewegungseinheit 15 entlang ihres Bewegungspfades E hin und her und mobilisiert weiterhin Pulver im abgeschirmten Bereich 24 und zerstört mit der stimmgabelähnlichen Struktur 30 gleichzeitig etwaige Pulverbrücken im Bereich des Endabschnitts 8 des Füllkanals 6 und bewegt gleichzeitig Pulver dort hinein, ohne es jedoch nennenswert zu pressen.

Die Füllkanalbewegungseinheit 13 bewegt sich auf den Endabschnitt 8 zu, wenn sich die abgeschirmte Bewegungseinheit 15 vom Endabschnitt 8 wegebewegt, und umgekehrt.

Im abgeschirmten Bereich 24 kann sich die Matrizenform 11 unter dem Endabschnitt 8 des Füllkanals entkoppelt von der Gewichtssäule des im Vorratsbehälter 2 bevorrateten Pulvers unter nahezu idealen Fließbedingungen bis zur Oberkante der Matrizenform 11 mit Pulver befüllen, bis die nun vollständig befüllte Matrize von der Pulverzuführeinrichtung 1 wegrotiert, hin zur Verpressstation 31, wo durch einen Stempel die Tablette gepresst wird.

Danach wiederholt sich der zuvor genannte Prozess, und das Flügelrad 21 dreht sich um einen definierten Winkel und somit für eine definierte Zeitspanne, während die Füllkanalbewegungseinheit 13 und die abgeschirmte Bewegungseinheit 15 stillstehen.

Wie bereits erwähnt, erlauben die erfindungsgemäße Pulverzuführeinrichtung 1 sowie das erfindungsgemäße Verfahren eine zuverlässige Zuführung von Pulver auch bei zum Verkleben neigenden Pulvern, bei gleichzeitig räumlich kompakter Ausführung und einem pulverschonenden schwerkraftsgetriebenen und pulververschleißarmen Fließen des Pulvers hin zur Matrizendreheinheit 10.

Durch die erfindungsgemäßen Ausgestaltungen wird das Pulvermaterial besonders geschont, da es sich kaum verklumpt und wenig erhitzt, was die vorliegende Erfindung besonders geeignet macht für Verarbeitung von Pulvern mit empfindlichen Inhaltsstoffen, wie beispielsweise Naturstoffen.

Die Erfindung und die hier zuvor beschriebenen Ausführungsformen eignen sind besonders für das Zuführen von Pulvern zur Herstellung von oral einzunehmenden Tabletten.

Die Erfindung und die hier zuvor beschriebenen Ausführungsformen eignen sich insbesondere für das Verarbeiten von naturstoffhaltigen Pulvern, welche oft klebrig, feucht und/oder wärmempfindlich sind, wie sie im Nahrungsergänzungsmittelbereich und/oder im Bereich der Naturheilkunde zum Einsatz kommen.

Die Erfindung und die hier zuvor beschriebenen Ausführungsformen eignen sind weiterhin im ganz besonderen Maße für die Pulverzufuhr für langsam laufende stationsweise arbeitende Tablettenpressen, welche Tabletten in einer Stückzahl von bis zu ca. 5.000 Tabletten pro Stunde herstellen.

## Patentansprüche

1. Pulverzuführeinrichtung (1) für eine Tablettenpresse (9), aufweisend:
einen Pulvervorratsbehälter (2),
einen im Boden des Pulvervorratsbehälters (2) angeordneten Füllkanal (6) zum schwerkraftsgetriebenen Befüllen einer darunter positionierbaren Matrizendreheinheit (10) mit Pulver, und
eine Pulverbewegungseinrichtung (12) zum Bewegen von Pulver im Bereich des Füllkanals (6), um ein schwerkraftsgetriebenes Fließen von Pulver vom Pulvervorratsbehälter (2) durch den Füllkanal (6) in eine darunter positionierbare Matrizendreheinheit (10) zu fördern, wobei
die Pulverbewegungseinrichtung (12) eine zumindest teilweise, insbesondere vollständig, im Füllkanal (6) angeordnete Füllkanalbewegungseinheit (13) aufweist, welche dazu eingerichtet ist, Pulver im Füllkanal (6) zu bewegen, **dadurch gekennzeichnet, dass**
die Füllkanalbewegungseinheit (13) dazu eingerichtet ist, Pulver durch fortlaufende Start-Stopp-Bewegungen zu bewegen.

2. Pulverzuführeinrichtung (1) nach einem der vorherigen Ansprüche, **dadurch gekennzeichnet, dass**
die Pulverbewegungseinrichtung (12) weiterhin eine drehende Pulverbewegungseinheit (14) aufweist, welche oberhalb des Füllkanals (6) angeordnet und dazu eingerichtet ist, Pulver durch Drehbewegung, insbesondere durch fortlaufende Start-Stopp-Drehbewegungen, hin zum Füllkanal (6) zu bewegen, wobei insbesondere
die drehende Pulverbewegungseinheit (14) am Boden des Pulvervorratsbehälters (2) angeordnet ist, und/oder der Antrieb (19) der drehenden Pulverbewegungseinheit bodenseitig außerhalb des Pulvervorratsbehälters (2) angeordnet ist.

3. Pulverzuführeinrichtung (1) nach Anspruch 2, **dadurch gekennzeichnet, dass** die drehende Pulverbewegungseinheit (14) ein mehrflügeliges Flügelrad (21) aufweist, wobei die Flügel (22) bei einer Drehbewegung zumindest über eine Teillänge, insbesondere über die vollständige Länge oder die nahezu vollständige Länge, des zum Pulvervorratsbehälter (2) hin offenen Füllkanals (6) streifen, und/oder der innere Außendurchmesser (a) des Flügelrades (21) bis an den Bereich des Füllkanals (6) heranreicht.

4. Pulverzuführeinrichtung (1) nach einem der Ansprüche 2 bis 3, **dadurch gekennzeichnet, dass** eine Pulverruhezone (23) im Pulvervorratsbehälter (2) radial außerhalb des Bewegungsbereichs der drehenden Pulverbewegungseinheit (14) vorgesehen ist.

5. Pulverzuführeinrichtung (1) nach einem der Ansprüche 2 bis 4, **dadurch gekennzeichnet, dass** eine vertikale Pulversäule bei befülltem Pulvervorratsbehälters (2) mehr als 1/2, insbesondere mehr als 2/3, besonders mehr als 3/4, des von der drehenden Pulverbewegungseinheit (14) eingenommenen Bewegungsfeldes bedeckt, und/oder eine vertikale Pulversäule bei befülltem Pulvervorratsbehälter (2) mehr als 1/2, insbesondere mehr als 2/3, besonders mehr als 3/4 der zum Pulvervorratsbehälter (2) hin offenen Füllkanallänge bedeckt.

6. Pulverzuführeinrichtung (1) nach einem der vorherigen Ansprüche, **dadurch gekennzeichnet, dass** die Füllkanalbewegungseinheit (13) dazu eingerichtet ist, sich entlang eines Bewegungspfades (D) im Füllkanal (6) hin und her zu bewegen, insbesondere die Füllkanalbewegungseinheit (13) auf ihrer dem Pulvervorratsbehälter (2) zugewandten Seite Pulverbewegungsverstärker (26), insbesondere Hervorstehungen, aufweist, und/oder die Füllkanalbewegungseinheit (13) mit ihrer Haupterstreckungsachse (C) und/oder ihrem Bewegungspfad (D) der länglichen Erstreckung des Füllkanals (6) folgt, und/oder der Füllkanal (6) kreisbogenförmig ausgebildet ist.

7. Pulverzuführeinrichtung (1) nach einem der vorherigen Ansprüche, **dadurch gekennzeichnet, dass** ein Endabschnitt (8) des Füllkanals in einem vertikal zum Pulvervorratsbehälter (2) abgeschirmten Bereich (24) angeordnet ist, insbesondere die drehende Pulverbewegungseinheit (14) und/oder die Füllkanalbewegungseinheit (13) mit ihren Bewegungsfeldern in den abgeschirmten Bereich (24) hineinragen.

8. Pulverzuführeinrichtung (1) nach Anspruch 7, **dadurch gekennzeichnet, dass** die Pulverbewegungseinrichtung (12) eine abgeschirmte Bewegungseinheit (15) aufweist, welche im abgeschirmten Bereich (24) angeordnet ist und dazu eingerichtet ist, Pulver im abgeschirmten Bereich (24) zu bewegen, insbesondere hin zum Füllkanalendabschnitt (8) zu bewegen, insbesondere die abgeschirmte Bewegungseinheit (15) dazu eingerichtet ist, Pulver durch fortlaufende Start-Stopp-Bewegungen zu bewegen.

9. Pulverzuführeinrichtung (1) nach Anspruch 8, **dadurch gekennzeichnet, dass** die abgeschirmte Bewegungseinheit (15) dazu eingerichtet ist, sich entlang eines Bewegungspfades (E) hin und her zu bewegen, insbesondere hierbei der Bewegungspfad (E) von außen in den Füllkanal (6) hineinragt.

10. Pulverzuführeinrichtung (1) soweit abhängig von einem der vorherigen Ansprüche, **dadurch gekennzeichnet, dass** der Bewegungspfad (E) der abgeschirmten Bewegungseinheit (15) senkrecht zum Bewegungspfad (D) der Füllkanalbewegungseinheit (13) angeordnet ist und/oder senkrecht zur Drehebene (F) der drehenden Pulverbewegungseinheit (14) angeordnet und/oder der Bewegungspfad (D) der Füllkanalbewegungseinheit (13) senkrecht zur Drehebene (F) der drehenden Pulverbewegungseinheit (14) angeordnet ist.

11. Pulverzuführeinrichtung (1) soweit abhängig von einem der vorherigen Ansprüche, **dadurch gekennzeichnet, dass** die Pulverzuführeinrichtung (1) eingerichtet ist, dass sich die Füllkanalbewegungseinheit (13) und/oder die abgeschirmte Bewegungseinheit (15) bewegen, wenn die drehende Pulverbewegungseinheit (14) stillsteht, und/oder eingerichtet ist, dass sich die abgeschirmte Bewegungseinheit (24) auf den Füllkanalendabschnitt (8) zubewegt während sich die Füllkanalbewegungseinheit (13) vom Füllkanalendabschnitt (8) wegbewegt.

12. Tablettenpresse (9), insbesondere stationsweise rotierende Tablettenpresse (9), aufweisend eine Pulverzuführeinrichtung (1) nach einem der vorherigen Ansprüche.

13. Tablettenpresse (9) nach Anspruch 12, aufweisend eine stationsweise rotierende Matrizendreheinheit (10), **dadurch gekennzeichnet, dass** die Tablettenpresse (9) dazu eingerichtet ist, die Pulverbewegungseinrichtung (12) in einem Takt abgestimmt zum Takt der Matrizendreheinheit (10) zu bewegen.

14. Verfahren zum Betreiben einer Pulverzuführeinrichtung (1) für eine Tablettenpresse (9), insbesondere zum Betreiben einer Pulverzuführeinrichtung (1) oder einer Tablettenpresse (9) gemäß einem der Ansprüche 1 bis 13, **dadurch gekennzeichnet, dass** Pulver im Füllkanal (6) eines Pulvervorratsbehälterbodens mittels einer zumindest teilweise im Füllkanal (6) angeordneten Füllkanalbewegungseinheit (13) durch eine fortlaufende Start-Stopp-Bewegungsabfolge bewegt wird.

## Claims

1. A powder feeding apparatus (1) for a tablet press (9), comprising:
a powder storage container (2),
a filling channel (6) arranged in the bottom of the powder storage container (2) for gravityfeeding powder to a die rotation unit (10) positionable thereunder, and
a powder advancing device (12) for advancing powder in the region of the filling channel (6) in order to promote a gravity-fed flow of powder from the powder storage container (2) through the filling channel (6) into a die rotation unit (10) positionable thereunder, wherein
the powder advancing device (12) includes a filling channel movement unit (13) which is arranged at least partially, in particular completely, in the filling channel (6) and which is configured to advance powder in the filling channel (6), **characterized in that** the filling channel movement unit (13) is configured to advance powder by intermittent advancing movements.

2. The powder feeding apparatus (1) according to any one of the preceding claims, **characterized in that**
the powder advancing device (12) furthermore includes a rotating powder advancing unit (14) which is arranged above the filling channel (6) and is configured to advance powder towards the filling channel (6) by rotary movement, in particular by non-intermittent rotary movements, wherein in particular
the rotating powder advancing unit (14) is arranged at the bottom of the powder storage container (2), and/or the drive (19) of the rotating powder advancing unit is arranged on the bottom side external to the powder storage container (2).

3. The powder feeding apparatus (1) according to claim 2, **characterized in that** the rotating powder advancing unit (14) includes a multi-blade impeller (21), wherein the blades (22), during a rotary movement, sweep over at least part of a length, in particular over the complete length or almost the complete length, of the filling channel (6) opening towards the powder storage container (2), and/or the inside of the outer diameter (a) of the impeller (21) extends as far as the region of the filling channel (6).

4. The powder feeding apparatus (1) according to any one of claims 2 to 3, **characterized in that** a powder resting zone (23) is provided in the powder storage container (2) radially outside the movement range of the rotating powder advancing unit (14).

5. The powder feeding apparatus (1) according to any one of claims 2 to 4, **characterized in that** in a filled state of the powder storage container (2) a vertical powder column covers more than 1/2, in particular more than 2/3, especially more than 3/4, of the movement range of the rotating powder advancing unit (14) and/or in a filled state of the powder storage container (2) a vertical powder column covers more than 1/2, in particular more than 2/3, especially more than 3/4, of the filling channel length open towards the powder storage container (2).

6. The powder feeding apparatus (1) according to any one of the preceding claims, **characterized in that** the filling channel movement unit (13) is configured to move back and forth along a movement path (D) in the filling channel (6), in particular the filling channel movement unit (13) includes powder movement promoting structures (26) on its side facing the powder storage container (2), in particular protrusions, and/or the main extension axis (C) of the filling channel movement unit (13) and/or its movement path (D) are coextensive to the longitudinal extension of the filling channel (6) and/or the filling channel (6) is arc-shaped.

7. The powder feeding apparatus (1) according to any one of the preceding claims, **characterized in that** an end portion (8) of the filling channel is arranged in a region (24) vertically shielded with respect to the powder storage container (2), in particular that the movement ranges of the rotating powder advancing unit (14) and/or of the filling channel movement unit (13) protrude into the shielded region (24).

8. The powder feeding apparatus (1) according to claim 7, **characterized in that** the powder advancing device (12) includes a shielded advancing unit (15) which is arranged in the shielded region (24) and is configured to advance powder in the shielded region (24), in particular to advance it towards the end portion (8) of the filling channel, in particular the shielded advancing unit (15) is configured to advance powder by non-intermittent advancing movements.

9. The powder feeding apparatus (1) according to claim 8, **characterized in that** the shielded advancing unit (15) is configured to move back and forth along a movement path (E), in particular **in that** the movement path (E) projects into the filling channel (6) from the outside.

10. The powder feeding apparatus (1) when dependent on one of the preceding claims, **characterized in that** the movement path (E) of the shielded advancing unit (15) is arranged perpendicular to the movement path (D) of the filling channel movement unit (13) and/or is arranged perpendicular to the plane of rotation (F) of the rotating powder advancing unit (14) and/or the movement path (D) of the filling channel movement unit (13) is arranged perpendicular to the plane of rotation (F) of the rotating powder advancing unit (14).

11. The powder feeding apparatus (1) when dependent on one of the preceding claims, **characterized in that** the powder feeding apparatus (1) is adapted so that the filling channel moving unit (13) and/or the shielded advancing unit (15) move when the rotating powder advancing unit (14) is stationary, and/or is adapted so that the shielded advancing unit (24) moves towards the end portion (8) of the filling channel while the filling channel moving unit (13) moves away from the end portion (8) of the filling channel.

12. A tablet press (9), in particular an intermittently rotating tablet press (9), including a powder feeding apparatus (1) according to any one of the preceding claims.

13. The tablet press (9) according to claim 12, comprising an intermittently rotating die rotation unit (10), **characterized in that** the tablet press (9) is configured to move the powder advancing device (12) in a cycle synchronized with the cycle of the die rotation unit (10).

14. A method for operating a powder feeding device (1) for a tablet press (9), in particular for operating a powder feeding apparatus (1) or a tablet press (9) according to any one of claims 1 to 13, **characterized in that**
powder is advanced in the filling channel (6) of a powder storage container bottom by means of a filling channel movement unit (13) arranged at least partially in the filling channel (6) by means of a sequence of non-intermittent advancing movements.

## Revendications

1. Dispositif d'alimentation de poudre (1) pour une presse à comprimés (9), comprenant :
un réservoir de stockage de poudre (2),
un canal de remplissage (6) agencé dans le fond du réservoir de stockage de poudre (2) et permettant de remplir de poudre, par gravité, une unité de rotation de matrice (10) pouvant être positionnée en dessous, et
un dispositif de déplacement de poudre (12) permettant de déplacer la poudre dans la région du canal de remplissage (6) afin de favoriser un écoulement par gravité de la poudre depuis le réservoir de stockage de poudre (2) jusque dans une unité de rotation de matrice (10) pouvant être positionnée en dessous, en passant par le canal de remplissage (6), dans lequel
le dispositif de déplacement de poudre (12) présente une unité de déplacement de canal de remplissage (13) agencée au moins partiellement, en particulier complètement, dans le canal de remplissage (6) et conçue pour déplacer la poudre dans le canal de remplissage (6), **caractérisé en ce que**
l'unité de déplacement de canal de remplissage (13) est conçue pour déplacer la poudre grâce à de continuels mouvements de marche-arrêt.

2. Dispositif d'alimentation de poudre (1) selon l'une quelconque des revendications précédentes, **caractérisé en ce que**
le dispositif de déplacement de poudre (12) présente en outre une unité rotative de déplacement de poudre (14) qui est agencée au-dessus du canal de remplissage (6) et qui est conçue pour déplacer la poudre vers le canal de remplissage (6) grâce à un mouvement rotatif, en particulier grâce à de continuels mouvements rotatifs de marche-arrêt, dans lequel en particulier
l'unité rotative de déplacement de poudre (14) est agencée au fond du réservoir de stockage de poudre (2) et/ou l'entraînement (19) de l'unité rotative de déplacement de poudre est agencé du côté du fond à l'extérieur du réservoir de stockage de poudre (2).

3. Dispositif d'alimentation de poudre (1) selon la revendication 2, **caractérisé en ce que** l'unité rotative de déplacement de poudre (14) présente une roue à ailettes (21) à plusieurs ailettes, dans lequel les ailettes (22), lors d'un mouvement de rotation, s'étendent au moins sur une longueur partielle, en particulier sur toute la longueur ou sur presque toute la longueur, du canal de remplissage (6) ouvert vers le réservoir de stockage de poudre (2), et/ou le diamètre extérieur interne (a) de la roue à ailettes (21) atteint la région du canal de remplissage (6).

4. Dispositif d'alimentation de poudre (1) selon l'une quelconque des revendications 2 à 3, **caractérisé en ce qu'**une région de repos de poudre (23) est prévue dans le réservoir de stockage de poudre (2) radialement à l'extérieur de la région de déplacement de l'unité rotative de déplacement de poudre (14).

5. Dispositif d'alimentation de poudre (1) selon l'une quelconque des revendications 2 à 4, **caractérisé en ce qu'**une colonne de poudre verticale couvre plus de 1/2, en particulier plus de 2/3, en particulier plus de 3/4, du champ de mouvement occupé par l'unité rotative de déplacement de poudre (14) lorsque le réservoir de stockage de poudre (2) est rempli et/ou une colonne de poudre verticale couvre plus de 1/2, en particulier plus de 2/3, en particulier plus de 3/4 de la longueur du canal de remplissage ouvert vers le réservoir de stockage de poudre (2) lorsque le réservoir de stockage de poudre (2) est rempli.

6. Dispositif d'alimentation de poudre (1) selon l'une quelconque des revendications précédentes, **caractérisé en ce que** l'unité de déplacement de canal de remplissage (13) est conçue pour se déplacer d'avant en arrière au sein du canal de remplissage (6) le long d'une trajectoire de déplacement (D), en particulier l'unité de déplacement de canal de remplissage (13) présente des amplificateurs de déplacement de poudre (26), en particulier des saillies, sur son côté tourné vers le réservoir de stockage de poudre (2), et/ou l'axe d'extension principal (C) et/ou la trajectoire de déplacement (D) de l'unité de déplacement de canal de remplissage (13) sui(ven)t l'extension longitudinale du canal de remplissage (6), et/ou le canal de remplissage (6) est réalisé en forme d'arc de cercle.

7. Dispositif d'alimentation de poudre (1) selon l'une quelconque des revendications précédentes, **caractérisé en ce qu'**une section d'extrémité (8) du canal de remplissage est agencée dans une région protégée (24) verticale par rapport au réservoir de stockage de poudre (2), en particulier les champs de mouvement de l'unité rotative de déplacement de poudre (14) et/ou de l'unité de déplacement de canal de remplissage (13) font saillie dans la région protégée (24).

8. Dispositif d'alimentation de poudre (1) selon la revendication 7, **caractérisé en ce que** le dispositif de déplacement de poudre (12) présente une unité de déplacement protégée (15) qui est agencée dans la région protégée (24) et est conçue pour déplacer la poudre dans la région protégée (24), en particulier pour la déplacer vers la section d'extrémité de canal de remplissage (8), l'unité de déplacement protégée (15) étant en particulier conçue pour déplacer la poudre grâce à de continuels mouvements de marche-arrêt.

9. Dispositif d'alimentation de poudre (1) selon la revendication 8, **caractérisé en ce que** l'unité de déplacement protégée (15) est conçue pour se déplacer d'avant en arrière le long d'une trajectoire de déplacement (E), la trajectoire de déplacement (E) empiétant en particulier depuis l'extérieur dans le canal de remplissage (6).

10. Dispositif d'alimentation de poudre (1) selon l'une quelconque des revendications précédentes, **caractérisé en ce que** la trajectoire de déplacement (E) de l'unité de déplacement protégée (15) est agencée perpendiculairement à la trajectoire de déplacement (D) de l'unité de déplacement de canal de remplissage (13) et/ou est agencée perpendiculairement au plan de rotation (F) de l'unité rotative de déplacement de poudre (14) et/ou la trajectoire de déplacement (D) de l'unité de déplacement de canal de remplissage (13) est agencée perpendiculairement au plan de rotation (F) de l'unité rotative de déplacement de poudre (14).

11. Dispositif d'alimentation de poudre (1) selon l'une quelconque des revendications précédentes, **caractérisé en ce que** le dispositif d'alimentation de poudre (1) est conçu de sorte que l'unité de déplacement de canal de remplissage (13) et/ou l'unité de déplacement protégée (15) se déplacent lorsque l'unité rotative de déplacement de poudre (14) est à l'arrêt, et/ou est conçu de sorte que l'unité de déplacement protégée (24) se déplace vers la section d'extrémité de canal de remplissage (8) pendant que l'unité de déplacement de canal de remplissage (13) s'éloigne de la section d'extrémité de canal de remplissage (8).

12. Presse à comprimés (9), en particulier presse à comprimés rotative stationnaire (9), comprenant un dispositif d'alimentation de poudre (1) selon l'une quelconque des revendications précédentes.

13. Presse à comprimés (9) selon la revendication 12, comprenant une unité de rotation de matrice (10) tournant de manière stationnaire, **caractérisée en ce que** la presse à comprimés (9) est conçue pour déplacer le dispositif de déplacement de poudre (12) selon une cadence adaptée à la cadence de l'unité de rotation de matrice (10).

14. Procédé de fonctionnement d'un dispositif d'alimentation de poudre (1) pour une presse à comprimés (9), en particulier de fonctionnement d'un dispositif d'alimentation de poudre (1) ou d'une presse à comprimés (9) selon l'une quelconque des revendications 1 à 13, **caractérisé en ce que**
la poudre est déplacée dans le canal de remplissage (6) d'un fond de réservoir de stockage de poudre grâce à une séquence de continuels mouvements de marche-arrêt au moyen d'une unité de déplacement de canal de remplissage (13) au moins partiellement agencée dans le canal de remplissage (6).
